# EUROPÄISCHE PATENTSCHRIFT

(11) **EP 3 152 421 B1**
(45) Veröffentlichungstag und Bekanntmachung des Hinweises auf die Patenterteilung: **15.05.2019**
(21) Anmeldenummer: 15726135.5
(22) Anmeldetag: 29.05.2015
(51) Int. Cl.: F01N 3/28, H05B 3/14, H05B 3/40, F01N 3/20

(54) **HEIZMODUL UND TANKSYSTEM**
HEATING MODULE AND TANK SYSTEM
MODULE DE CHAUFFAGE ET SYSTÈME DE RÉSERVOIR

(30) Priorität: 06.06.2014 DE 102014108074
(43) Veröffentlichungstag der Anmeldung: 12.04.2017
(73) Patentinhaber: DBK David + Baader GmbH, Nordring 26 76761 Rülzheim (DE)
(72) Erfinder: DEHRMANN, Sven, 76744 Schaidt (DE)
(74) Vertreter: Winter, Brandl, Fürniss, Hübner, Röss, Kaiser, Polte - Partnerschaft mbB
(86) Internationale Anmeldenummer: PCT/EP2015/061974
(87) Internationale Veröffentlichungsnummer: WO 2015/185453

(56) Entgegenhaltungen:
- EP-A1- 2 650 497
- WO-A1-2013/142188
- DE-A1- 10 258 257
- DE-A1-102006 027 487
- DE-A1-102010 029 334
- US-A1- 2008 260 597
- US-A1- 2012 103 433
- US-B1- 8 183 503

## Beschreibung

Die Erfindung betrifft ein Heizmodul zum Aufschmelzen oder Erwärmen eines Betriebsfluids gemäß dem Oberbegriff des Patentanspruchs 1 und ein mit einem derartigen Heizmodul ausgeführtes Tanksystem.

Bei sehr niedrigen Außentemperaturen im Minusbereich kommt es vor, dass Betriebsflüssigkeiten, wie beispielsweise eine Harnstofflösung eines SCR-Katalysators oder eine Scheiben- oder Scheinwerferreinigungsflüssigkeit oder eine einfriert und nach dem Start des Fahrzeugs für den bestimmungsgemäßen Gebrauch zunächst aufgetaut werden müssen. Dies ist insbesondere kritisch bei SCR-Katalysatoren, die zur Verringerung der Stickoxid-Emissionen von Verbrennungskraftmaschinen, beispielsweise Dieselmotoren eingesetzt werden.

Bei der SCR-Technologie (Selective Catalytic Reduction) werden die Stickoxide in einem Katalysator mit einem geeigneten Reduktionsmittel chemisch in die umwelttechnisch unbedenklichen Substanzen Stickstoff und Wasser umgesetzt. Als Reduktionsmittel wird dampf- bzw. gasförmiger Ammoniak verwendet, der aus einer wässrigen Harnstofflösung mit einem Harnstoffgehalt von 32,5 Gewichtsprozent erzeugt und in den Abgasstrom eingebracht wird. Diese wässrige Harnstofflösung wird heute standardisiert unter dem Namen AdBlue® angeboten. Bei dieser wässrigen Harnstofflösung besteht das Problem, dass diese unterhalb von -11°C gefriert und somit nicht mehr zum Katalysator gefördert werden kann.

Um die insbesondere beim Kaltstart eines Fahrzeugs entstehenden Stickoxid-Emissionen zu senken, ist es daher erforderlich, diese Harnstofflösung schnellstmöglich aufzutauen. In der DE 20 2006 010 615 U1 der Anmelderin ist ein System vorgeschlagen, bei dem in einem großen Harnstofftank ein Schmelztank mit kleinerem Volumen aufgenommen ist, wobei beide Tanks Harnstofflösung aufnehmen. Der kleinere Schmelztank ist mit einem leistungsstarken Heizmodul versehen, über das das verhältnismäßig kleine Harnstoffvolumen beim Start des Fahrzeugs sehr schnell aufgetaut wird, so dass der SCR-Katalysator durch Entnahme von aufgeschmolzener Harnstofflösung aus dem kleinen Schmelztank betrieben werden kann, um die Stickstoff-Emissionen abzusenken.

In der EP 2 341 224 A1 der Anmelderin ist ein Heizmodul beschrieben, bei dem als Heizelemente PTC-Widerstandselemente verwendet werden, deren Wärme über rippenartige Profilkörper an die Betriebsflüssigkeit, beispielsweise die Harnstofflösung übertragen wird. Die Profilkörper sind als Strangpressprofil oder als Druckgussteil ausgebildet und begrenzen gemeinsam einen Aufnahmeraum für die PTC-Widerstandselemente. Des Weiteren ist an den Profilkörpern eine Aufnahme für einen Filter ausgebildet. Die Anordnung bestehend aus den Profilkörpern und den darin aufgenommenen PTC-Widerstandselementen wird fluiddicht, vorzugsweise mit Kunststoff umspritzt, umgossen oder auf sonstige Weise ummantelt.

US8183503B1 und DE102006027487A1 offenbaren andere Heizmodule.

Nachteilig bei dieser Lösung ist, dass die Profilkörper zum Einen einen erheblichen Raum in dem das Betriebsfluid aufnehmenden Tank in Anspruch nehmen. Des Weiteren sind diese Profilkörper aufgrund ihrer massiven Ausgestaltung relativ schwer, dass zum Einen viel Energie erforderlich ist, um diese beim Kaltstart auf Betriebstemperatur zu bringen, zum Anderen wird das Gewicht der SCR-Einrichtung dann nicht unerheblich von dem Heizmodul bestimmt.

Ein weiterer Nachteil dieses Konzepts besteht darin, dass das Spritzgießwerkzeug zum Umspritzen der Profilkörper relativ voluminös und somit teuer ausgeführt werden muss, so dass die Investitionskosten zur Fertigung eines derartigen Heizmoduls erheblich sind.

Dem gegenüber liegt der Erfindung die Aufgabe zugrunde, ein Heizmodul und ein mit einem derartigen Heizmodul ausgeführtes Tanksystem zu schaffen, bei dem die oben geschilderten Nachteile beseitigt sind.

Diese Aufgabe wird durch ein Heizmodul mit den Merkmalen des Patentenanspruchs 1 bzw. ein Tanksystem mit den Merkmalen des nebengeordneten Patentanspruchs 18 gelöst.

Vorteilhafte Weiterbildungen der Erfindung sind Gegenstand der Unteransprüche.

Das erfindungsgemäße Heizmodul dient zum Aufschmelzen oder Erwärmen eines in einem Tanksystem aufgenommenen Betriebsfluids, wie beispielsweise eine Harnstofflösung eines SCR-Katalysators oder eine Scheiben- oder Scheinwerferreinigungsflüssigkeit. Das Heizmodul hat eine Heizeinheit, deren Wärme über ein Wärmeverteilelement auf das Betriebsfluid übertragen wird. Das Heizmodul ist des Weiteren vorzugsweise mit einem Fluidauslass für das Betriebsfluid ausgeführt. Erfindungsgemäß ist das Wärmeverteilelement als eine im Wesentlichen plattenförmige Verteilerplatte ausgeführt, die auf einer Großfläche die Heizeinheit des Heizmoduls trägt, wobei die Heizeinheit und die Verteilerplatte zumindest teilweise gemeinsam fluiddicht umspritzt und/oder lackiert bzw. beschichtet sind.

Unter "plattenförmig" wird dabei ein Körper verstanden, dessen Großflächen im Wesentlichen parallel zueinander angeordnet sind, wobei der Parallelabstand im Wesentlichen die Dicke der Verteilerplatte bestimmt. Diese Dicke ist um ein Vielfaches geringer als die Längen- und/oder Breitenabmessungen der Großfläche.

Die Ummantelung erstreckt sich dabei vorzugsweise zumindest um den Bereich der Heizeinheit, so dass diese gegenüber der Harnstofflösung abgedichtet ist.

Der Aufbau des erfindungsgemäßen Heizmoduls ist deutlich einfacher als derjenige des Standes der Technik, da die vormontierte Heizeinheit lediglich auf der plattenförmigen Verteilerplatte befestigt werden muss. Die Geometrie dieser Verteilerplatte kann mit minimalem Aufwand an die jeweiligen Tankabmessungen angepasst werden, so dass eine optimale Wärmeübertragung von der Verteilerplatte auf das Betriebsfluid gewährleistet ist.

Derartige plattenförmige Verteilerplatten sind mit geringem Aufwand aus Plattenmaterial zu fertigen - so dass die Investitionskosten gegenüber dem Stand der Technik deutlich verringert sind, da bei diesem zur Herstellung von Druckguß-Profilkörpern vergleichsweise teure Druckgußwerkzeuge mit kurzer Standzeit erforderlich sind. Falls diese Profilkörper beim Stand der Technik als Strangpressprofile ausgeführt sind, bestehen erhebliche Beschränkungen hinsichtlich der möglichen Geometrie, so dass eine optimale Anpassung an den jeweiligen Tank nur schwierig möglich ist.

Bei einem besonders einfachen Ausführungsbeispiel ist die Verteilerplatte aus einem gut wärmeleitenden Metall, vorzugsweise Aluminium durch Stanzen oder dergleichen ausgebildet. Selbstverständlich können auch andere Verfahren, wie beispielsweise Laserschneiden, spanabhebende Verfahren usw. verwendet werden, um die Verteilerplatte aus einem Plattenmaterial zu formen. Ebenso können auch andere gut wärmeleitende Materialien verwendet werden.

Vorteilhafter Weise ist ein Fluidauslass für das Betriebsfluid an der Heizeinheit ausgebildet, wobei dieser mit einem verteilerplattenseitigen Sauganschluss in Fluidverbindung steht, durch den das Betriebsfluid aus dem Tank abgezogen werden kann.

Bei einem Ausführungsbeispiel der Erfindung ist vorgesehen, dass die Verteilerplatte und die Heizeinheit gemeinsam einen Aufnahmeraum für zumindest ein Heizelement bilden, wobei vorzugsweise ein Masseanschluss verteilerplattenseitig und ein Plusanschluss heizeinheitseitig vorgesehen ist.

Das Erwärmen/Heizen des Betriebsfluids ist besonders effektiv, wenn der Fluidauslass zumindest abschnittsweise beheizt ist und die Verteilerplatte und/oder die Heizeinheit durchsetzt und im Sauganschluss mündet.

Das Beheizen des Fluidauslasses kann beispielsweise über ein ringförmiges Wärmeübertragelement erfolgen, das den Auslassstutzen zum Beheizen zumindest abschnittsweise umgreift. Dieses ringförmige Wärmeübertragelement wird ebenfalls über die Heizeinheit beheizt. Auch eine unabhängige Beheizung des Fluidauslasses ist möglich.

Vorteilhafterweise kann an einer von der Heizeinheit entfernten Großfläche der Verteilerplatte ein Rücklaufkanal ausgebildet sein, der einerseits im Sauganschluss und andererseits in einer Rücklauföffnung der Platte mündet.

Die Herstellung dieses Rücklaufkanals und die Ausgestaltung der Verteilerplatte ist besonders einfach, wenn der Rücklaufkanal beim Umspritzen in dem Kunststoff ausgebildet wird. Dabei wird auch die Beheizung des Rücklaufkanals über die Verteilerplatte sichergestellt.

Bei einer Variante der Erfindung wird beim Umspritzen ein Befestigungsflansch ausgebildet, der einen elektrischen Anschluss der Heizeinheit und den Fluidauslass umgreift. Über diesen Befestigungsflansch wird das Heizmodul am Tank befestigt, wobei dann der elektrische Anschluss und der Fluidauslass außerhalb des Tanks münden und nicht in Kontakt mit dem Betriebsfluid gelangen.

Die Montage des Heizmoduls ist besonders einfach, wenn der Befestigungsflansch als Schweißflansch ausgeführt ist.

Für den Fall, dass eine Filterung des Betriebsfluids erforderlich ist, kann an der Verteilerplatte und/oder an der Heizeinheit eine Aufnahme für einen Filter ausgebildet sein. Auch hier wird dann der Bereich des Filters direkt oder sequentiell beheizt. Diese Aufnahme kann beispielsweise beim Umspritzen ausgebildet werden.

Die Abdichtung des Aufnahmeraums für das zumindest eine Heizelement ist besonders einfach, wenn an einem verteilerplattenseitigen Umfangsrand der Heizeinheit ein Dichtelement vorgesehen ist. Dieses Dichtelement kann in Mehrkomponentenspritzgießtechnik angespritzt sein oder aber als gesondertes Dichtelement eingelegt werden.

Zur Überwachung der Temperatur kann ein Temperaturfühler vorgesehen werden.

Die Montage des Heizmoduls ist besonders einfach, wenn die Heizeinheit durch Rastmittel oder dergleichen vor dem Umspritzen an der Verteilerplatte vorpositioniert bzw. fixiert wird.

Das zumindest eine Heizelement kann ein PTC-Widerstandselement, ein Drahtwiderstand, ein Rohrheizkörper, ein Folienheizelement, ein Induktionsheizelement oder dergleichen sein.

Die Anbindung dieser Heizelemente ist besonders einfach, wenn im Aufnahmeraum zumindest eine Feder vorgesehen ist, über die das zumindest eine Heizelement zur Herstellung des Massekontaktes gegen die Verteilerplatte vorgespannt ist.

Ein Gehäuse des Anschlusssteckers, ein Teil des Fluidauslasses und sonstige Funktionselemente des Heizmoduls können beim Umspritzen ausgebildet werden, so dass der Grundkörper der Verteilerplatte und der Heizeinheit relativ einfach ausführbar sind.

Für den Fall, dass beim Ummanteln aufgrund thermischer Spannungen zu Rissbildungen in der Ummantelung kommt, ist bei einer vorteilhaften Weiterbildung der Erfindung vorgesehen, geeignete Elemente zur Kompensation derartiger Spannungen auszubilden.

Diese Elemente können dabei beispielsweise Ausgleichselemente sein, die zwischen die Ummantelung und die Verteilerplatte bzw. das Heizelement eingebracht werden.

Möglich ist es auch, die Verteilerplatte mit elastischen Sicken oder dergleichen auszuführen. Die Verteilerplatte kann in einer weiteren Lösung mit Winkelabschnitten zur Spannungskompensation versehen werden. Prinzipiell ist es auch möglich, die Verteilerplatte mit einer Vorspannung auszubilden, die beim Auftreten der thermischen Spannungen kompensiert wird, so dass der Aufbau spannungsfrei wird.

Eine weitere Möglichkeit besteht darin, das Heizmodul im Wesentlichen nur im Bereich der Heizeinheit zu ummanteln, so dass diese fluiddicht gegenüber der Harnstofflösung abgedichtet ist. Von der Heizeinheit entfernte Bereiche der Verteilerplatte können dann bei geeigneter Materialwahl unbeschichtet bleiben oder aber mit einer einfacheren Beschichtung, beispielsweise einer Lackschicht oder dergleichen versehen werden.

Ein bevorzugtes Ausführungsbeispiel der Erfindung wird im Folgenden anhand schematischer Zeichnungen näher erläutert. Es zeigen:
Figur 1 eine stark schematisierte Darstellung eines SCR-Tanks, in dem ein erfindungsgemäßes Heizmodul aufgenommen ist;
Figur 2 ein erfindungsgemäßes Heizmodul in einer Draufsicht;
Figur 3 das Heizmodul aus Figur 2 in einer Ansicht von unten;
Figur 4 das Heizmodul in einer Figur 2 entsprechenden Ansicht ohne Umspritzung;
Figur 5 eine Verteilerplatte des Heizmoduls gemäß den Figuren 2 bis 4;
Figur 6 die Verteilerplatte gemäß Figur 5 mit einigen Anbauten;
Figur 7 eine Figur 4 entsprechende Ansicht einer Heizeinheit des Heizmoduls;
Figur 8 eine Unteransicht der Heizeinheit gemäß Figur 7;
Figur 9 eine Figur 8 entsprechende Ansicht ohne PTC-Widerstandselemente;
Figur 10 eine den Figuren 8 und 9 entsprechende Ansicht ohne Kontaktblech, wodurch ein Temperaturfühler sichtbar ist und
Figur 11 Varianten des Heizmoduls, bei denen eine Rissbildung der Ummantelung aufgrund thermischer Spannungen minimiert ist.

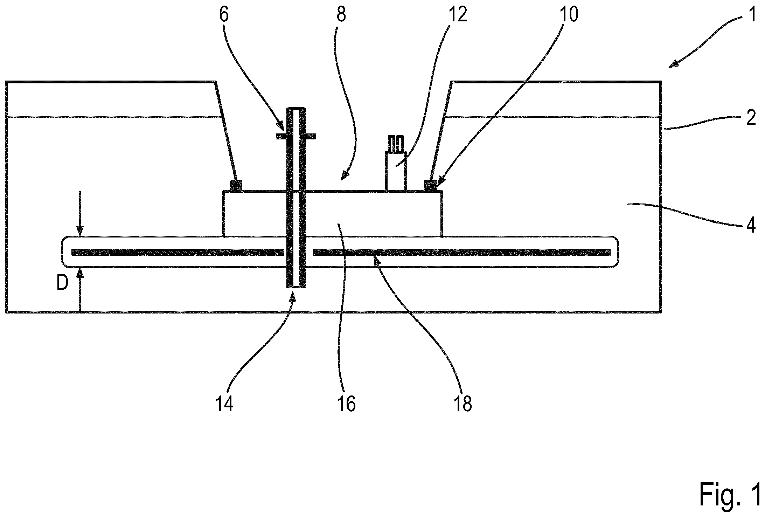

Figur 1 zeigt ein in äußerst stark schematisierter Form ein Tanksystem 1 eines SCR-Katalysators mit einem SCR-Tank 2, der eine Harnstofflösung 4 aufnimmt. Der Tank 2 kann beispielsweise aus zwei Spritzguss- oder Tiefziehteilen oder im Blasformverfahren hergestellt sein.

Die Harnstofflösung 4 kann aus dem Tank 2 über einen Fluidauslass 6 abgezogen werden. Dieser Fluidauslass 6 ist beim dargestellten Ausführungsbeispiel mit einem Anschlussstutzen ausgeführt, auf den eine Schlauchleitung aufgesteckt werden kann, die zum SCR-Katalysator (nicht dargestellt) führt. Der Fluidauslass 6 ist beim dargestellten Ausführungsbeispiel Teil eines Heizmoduls 8, das über einen Befestigungsflansch 10 fluiddicht mit dem Tank 2 verbunden ist, so dass der Fluidauslass 6 und ein elektrischer Anschlussstecker 12 außerhalb des Tanks 2 angeordnet sind. Die Harnstofflösung 4 wird über einen Sauganschluss 14 aus dem Tank angesaugt und tritt dann über den genannten Fluidauslass 6 aus dem Tank 2 aus. Das Heizmodul 8 hat eine Heizeinheit 16 mit elektrischen Heizelementen, die über den Anschlussstecker 12 bestromt sind. Die Wärmeübertragung auf die Harnstofflösung 4 erfolgt über eine Verteilerplatte 18, deren Großflächen etwa senkrecht zur Zeichenebene in Figur 1 verlaufen und deren Dicke D um ein vielfaches geringer ist als die Breiten- oder Längserstreckung der Verteilerplatte 18. Die Außenabmessungen der Verteilerplatte 18 sind an die Tankabmessungen angepasst, so dass eine optimale Wärmeübertragung ermöglicht wird. Die Grundfläche der Heizeinheit 16 ist wesentlich geringer als die Fläche der Verteilerplatte 18, so dass diese über den Umfang der Heizeinheit 16 hinaussteht.

Der in Figur 1 dargestellte Tank 2 kann beispielsweise als Schmelztank in einem größeren Tank angeordnet sein, wobei dann eine Fluidverbindung zu dem größeren Tank hergestellt sein muss. Selbstverständlich ist es jedoch auch möglich, einen einzigen Tank 2 mit einem derartigen Heizmodul 8 auszubilden, um die Harnstofflösung 4 zu enteisen und auf Betriebstemperatur zu bringen.

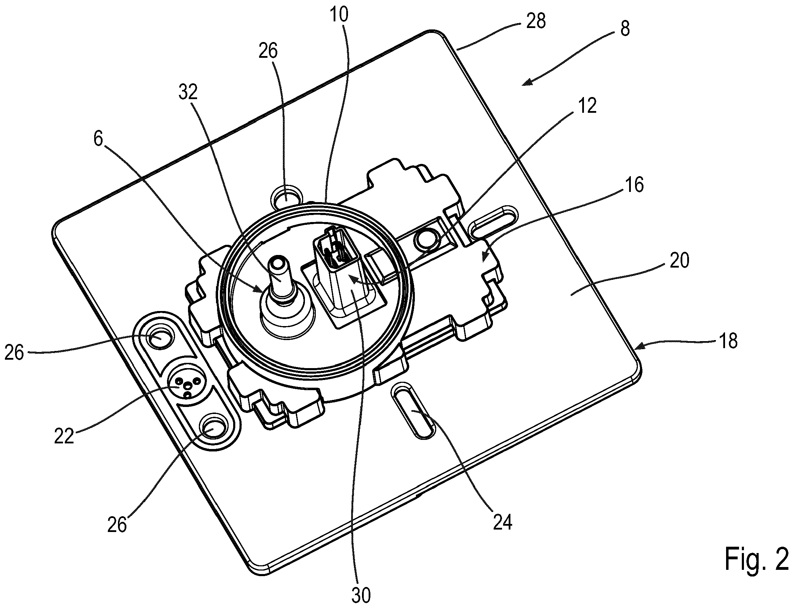

Figur 2 zeigt eine Einzeldarstellung des Heizmoduls 8. Wie erläutert, ist die Heizeinheit 16 auf die in Figur 2 sichtbare Großfläche 20 der Verteilerplatte 18 aufgesetzt. Des Weiteren sichtbar ist der elektrische Anschlussstecker 12, der mit dem jeweils erforderlichen Anschlussgesicht ausgebildet ist. Benachbart zum Anschlussstecker 12 ist der mit einem Anschlussstutzen32 für z.B. einen Schlauch oder einen Quick-Connector ausgebildete Fluidauslass 6 angeordnet. Der Befestigungsflansch 10 umgreift sowohl den Fluidauslass 6 als auch den Anschlussstecker 10. Beim dargestellten Ausführungsbeispiel ist dieser Befestigungsflansch 10 als Schweißflansch ausgeführt, der fluiddicht mit dem Oberteil des Tanks 2 (Figur 1) verschweißt wird, so dass der Anschlussstecker 12 und der Fluidauslass 6 von außen her zugänglich sind.

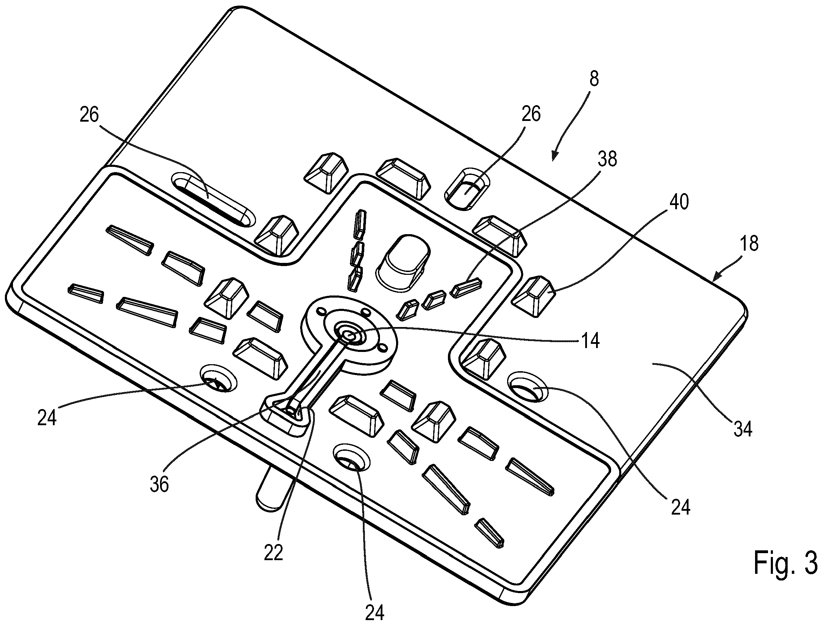

Wie in Figur 1 angedeutet, taucht die eigentliche Heizeinheit 16 mit der Verteilerplatte 18 in die Harnstofflösung 4 ein. In der Großfläche 20 mündet ein Rücklaufeinlass 22 für die Harnstofflösung, der über einen anhand Figur 3 erläuterten Rücklaufkanal 36 in Fluidverbindung mit einem rückwärtigen Sauganschluss 14 steht.

Sichtbar in Figur 2 sind des Weiteren noch einige längliche Durchbrüche 24 und kreisförmige Durchbrüche 26, die zur Verbesserung der Konvektion im Tank vorgesehen sind, so dass eine gleichmäßige Erwärmung der Harnstofflösung 4 gewährleistet ist. Des Weiteren dienen die Durchbrüche 24, 26 auch zur Optimierung der Umspritzung (Verzug) bzw. als Fixierpunkte bei der Umspritzung.

In der Darstellung gemäß Figur 2 hat die Verteilerplatte 18 eine in etwa rechteckförmige Großfläche 20 - diese Geometrie kann in Abhängigkeit von den Tankabmessungen gewählt werden. Die Verteilerplatte 18 ist demnach nicht auf eine Rechteckform beschränkt sondern kann praktisch jedwede plattenförmige Kontur aufweisen. Wie erwähnt, sind die Außenabmessungen der Großfläche 20 deutlich größer als die Dicke D (siehe Figur 1) der Verteilerplatte 18.

Die endgültige Verbindung der Heizeinheit 16 und der Verteilerplatte 20 erfolgt durch eine Ummantelung, die vorzugsweise durch Umspritzen oder Umgießen ausgebildet ist, so dass die Außenkonturen des Heizmoduls 8 vollständig ummantelt sind. Diese Ummantelung wird im Folgenden als Umspritzung 28 bezeichnet. Durch diese Kunststoff-Umspritzung 28 wird unter anderem der Befestigungsflansch 10 und der Anschlussstutzen 32 ausgebildet. Des Weiteren dient die Umspritzung auch zum Schutz der Verteilerplatte vor dem agressiven AdBlue.

Figur 3 zeigt eine Unteransicht des Heizmoduls 8. In dieser Ansicht ist eine unterliegende Großfläche 34 der Verteilerplatte 18 sichtbar. In dieser Großfläche 34 mündet der Rücklaufeinlass 22 in einem Rücklaufkanal 36, der zu dem Sauganschluss 14 verläuft. Sichtbar sind auch die Durchbrüche 24 und 26 zur Verbesserung der Konvektion und zur Bauteilfixierung. An den Sauganschluss 14 kann ein Filter angesetzt werden, wobei in diesem Bereich eine Vielzahl von Abstandshaltern 38 bzw. Stützelementen für einen derartigen Filter vorgesehen sind.

Die prismenartigen Vorsprünge 40 an der Großfläche 34 der Verteilerplatte 18 sind Umspritzungen von Rastelementen, mit denen die Heizeinheit 16 mit der Verteilerplatte 18 zur Vormontage verbunden ist. Dem entsprechend sind beim dargestellten Ausführungsbeispiel insgesamt 10 Rastelemente zur Verbindung von Heizeinheit 16 und Verteilerplatte 18 ausgebildet.

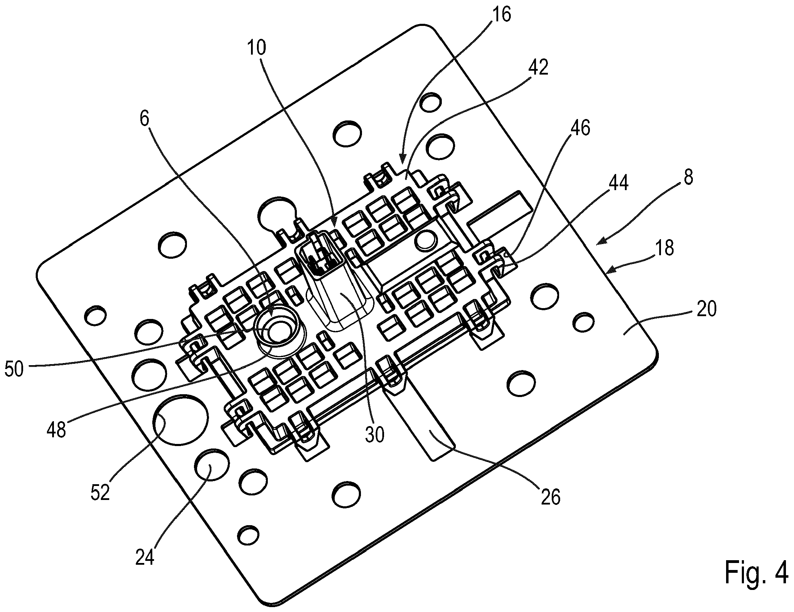

Figur 4 zeigt eine Figur 2 entsprechende Ansichten des Heizmoduls 8 ohne Umspritzung. Man erkennt in dieser Darstellung sehr gut die als Stanzteil aus Aluminium gefertigte Verteilerplatte 18, auf die die Heizeinheit 16 aufgeclipst ist. Hierzu sind am Außenumfang eines Heizgehäuses 42 der Heizeinheit 16 10 Schnapphaken 44 ausgebildet (nur einer mit Bezugszeichen versehen), die in entsprechende Rastausnehmungen 46 der Verteilerplatte 18 einrasten, um das Heizgehäuse 42 der Heizeinheit 16 mit der Verteilerplatte 18 zu fixieren.

Am Heizgehäuse 42 ist das Gehäuse 30 des Anschlusssteckers 10 ausgebildet. Der Anschlussstutzen 32 wird beim Umspritzen ausgebildet. Als Basis ist am Heizgehäuse 42 ein Flanschring 48 angeformt. Dieser Flanschring dient zum Abdichten des ringförmigen Wärmeübertragelements 50 gegenüber dem Aufnahmeraum 68. Die fluiddichte Abdichtung kann dabei mittels eines (nicht dargestellten) Dichtelements (z.B. O-Ring) oder einer geeigneten Presspassung realisiert werden. In diesen Flanschring 48 des Fluidauslasses 6 taucht ein ringförmiges Wärmeübertragelement 50 ein, das über die sich bei Bestromen der Heizeinheit 16 erwärmende Verteilerplatte 18 erwärmt. Das Wärmeübertragelement 50 dient dazu, den Fluidauslass 6 aufzuheizen, so dass das aus dem Tank austretende Fluid weiter erwärmt wird und somit sehr schnell seine Betriebstemperatur erreicht.

Das Heizgehäuse 42 kann aus temperatur- und harnstoffbeständigem Kunststoff hergestellt sein, wobei die Außenkontur im Hinblick auf eine optimale Maßhaltigkeit beim Spritzgießen und Temperaturbeständigkeit im Betrieb ausgestaltet ist.

Die beispielsweise aus Aluminium gefertigte Verteilerplatte 18 ist als Masseplatte ausgeführt und steht - wie im Folgenden näher erläutert wird - in direktem elektrischen Kontakt mit den Heizelementen der Heizeinheit 16.

Die in Figur 4 links liegende relativ große Öffnung 52 bildet nach dem Umspritzen einen Teil des Rücklaufs für die Harnstofflösung. Die sonstigen in Figur 4 sichtbaren Durchbrüche der Verteilerplatte 18 dienen zur Aufnahme von sonstigen Funktionselementen oder bilden nach dem Umspritzen die Durchbrüche 24, 26 zur Verbesserung der Konvektion oder zur Fixierung der Umspritzung aus.

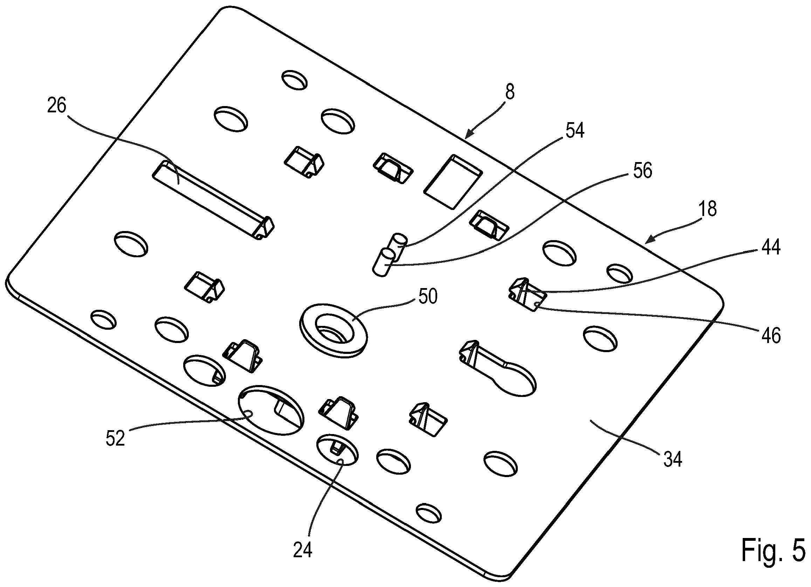

In Figur 5 ist eine Figur 3 entsprechende Unteransicht des Heizmoduls 8 dargestellt. In dieser Darstellung deutlich sichtbar sind die Endabschnitte der Schnapphaken 44, die in die Rastausnehmungen 46 eintauchen, so dass die Heizeinheit 16 bereits vor dem Umspritzen zuverlässig mit der Verteilerplatte 18 verbunden ist.

Bei dem dargestellten Ausführungsbeispiel ist das Wärmeübertragelement 50 buchsenförmig ausgebildet und in die Verteilerplatte 18 eingepresst und kragt dann nach oben in den Flanschring 48 der Heizeinheit 16 hinein.

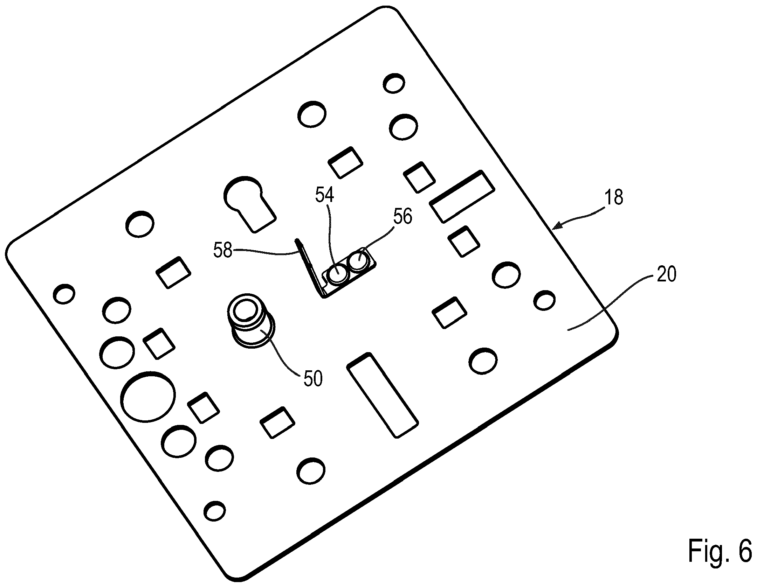

In der Darstellung gemäß Figur 5 sind mit den Bezugszeichen 54, 56 nietenartige Befestigungsmittel gekennzeichnet, die zum Herstellen des Massekontaktes verwendet sind. Dies wird anhand Figur 6 verdeutlich, die eine Einzeldarstellung der Verteilerplatte 18 zeigt. Dementsprechend wird über die Befestigungsmittel 54, 56 ein Massekontakt 58 an der Verteilerplatte 18 befestigt, der in diesem Fall als Winkelblech ausgebildet ist und mit einem entsprechenden Massekontakt des Anschlusssteckers 12 verbunden wird. Vorteilhaft wird aus dem Winkelblech bereits die Kontur des in dem Anschlussstecker 12 positionierten Kontaktes 62 gebildet.

Der heizeinheitsseitige Endabschnitt des buchsenförmigen Wärmeübertragelementes 50 kragt aus der Großfläche 20 der Verteilerplatte 18 in Richtung zur Heizeinheit 16 (nicht dargestellt in Figur 6) aus. Im vormontierten Zustand taucht dieser Endabschnitt in den Flanschring 48 ein. Die sonstigen Elemente der Verteilerplatte 18 wurden anhand der vorstehenden Figuren erläutert, so dass weitere Ausführungen entbehrlich sind.

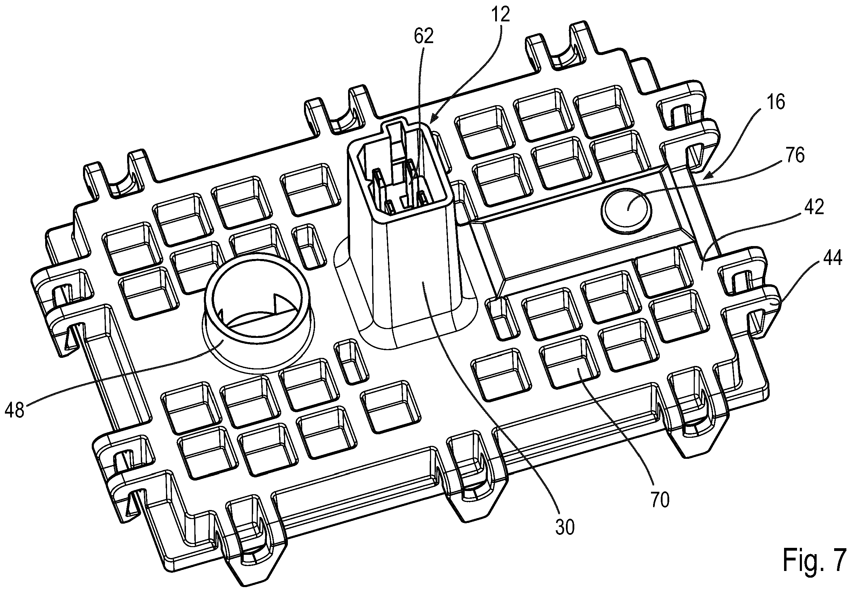

Figur 7 zeigt eine Einzeldarstellung der Heizeinheit 16 mit dem aus Spritzguss gefertigten Heizgehäuse 42, an dem die 10 Schnapphaken 44 angeformt sind. Wie erläutert, sind auch das Gehäuse 30 des Anschlusssteckers 12 und der Flanschring 48 an das Heizgehäuse 42 angeformt. Dieses Gehäuse 30 umgreift die Kontakte 62 des Anschlusssteckers, über die der Massekontakt 58 und der Pluskontakt erfolgen. Die in Figur 7 dargestellten rechteckförmigen Ausnehmungen oder Taschen 70 dienen zur Minimierung der Wandstärke des Heizgehäuses 16 und sind im Hinblick auf eine verzugsfreie Abkühlung und hohe Maßhaltigkeit optimiert. Zusätzlich wird mittels der Taschen 70 die Festigkeit erhöht und das Füllverhalten beim Spritzgießen optimiert.

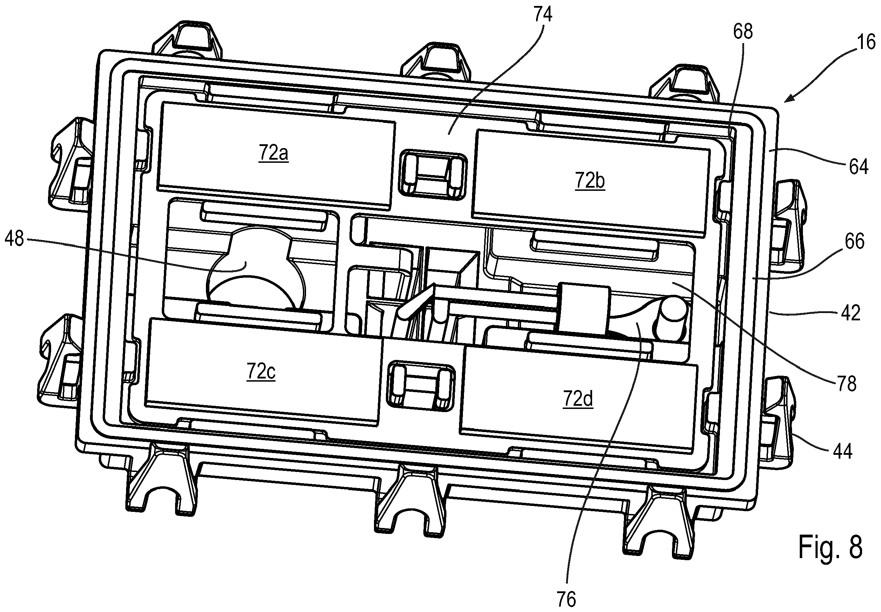

Figur 8 zeigt eine Ansicht von der Verteilerplatte 18 her auf die Heizeinheit 16. Dementsprechend ist das Heizgehäuse 42 deckel- oder haubenförmig ausgebildet und hat verteilerplattenseitig einen Umfangsrand 64 entlang dem das Heizgehäuse 42 auf der Großfläche 20 der Verteilerplatte 18 aufliegt. In diesem Auflagebereich ist eine umlaufende Dichtung 66 vorgesehen. Diese kann als gesondert eingelegte Dichtlippe ausgebildet sein. Prinzipiell ist es jedoch auch möglich, die Dichtung 66 im Mehrkomponenten-Spritzgießverfahren einstückig mit dem Heizgehäuse 42 auszubilden. Analoges gilt auch für die Eindichtung des ringförmigen Wärmeübertrageelementes 50.

Am Umfang des hauben- oder deckelförmigen Heizgehäuses 42 sind die 10 genannten Schnapphaken 44 ausgebildet. Das Heizgehäuse 42 begrenzt gemeinsam mit der in Figur 8 nicht sichtbaren Verteilerplatte 18 einen Aufnahmeraum 68, in dem die eigentlichen Heizelemente aufgenommen sind. Beim dargestellten Ausführungsbeispiel sind als Heizelemente vier PTC-Widerstandselemente 72a, 72b, 72c, 72d vorgesehen, die über ein gemeinsames Kontaktblech 74 mit dem Pluskontakt des Anschlusssteckers 12 verbunden ist. Anstelle eines einzigen Kontaktblechs 74 können auch mehrere Kontaktbleche verwendet werden, so dass eine mehrstufige Heizeinheit realisierbar ist.

In der Darstellung gemäß Figur 8 sieht man auch den aufnahmeraumseitigen Mündungsbereich des Flanschrings 48, in den der Endabschnitt des Wärmeübertrageelementes 50 im montierten Zustand eintaucht. Die Ansteuerung der PTC-Widerstandselemente 72 erfolgt auch in Abhängigkeit von dem Signal eines NTC-Temperaturfühlers 76, über den die Temperatur der Heizeinheit erfassbar ist. Dieser Temperaturfühler 76 ist in eine entsprechende Aufnahme 78 des Heizgehäuses 42 eingesetzt und über den Anschlussstecker 12 kontaktiert.

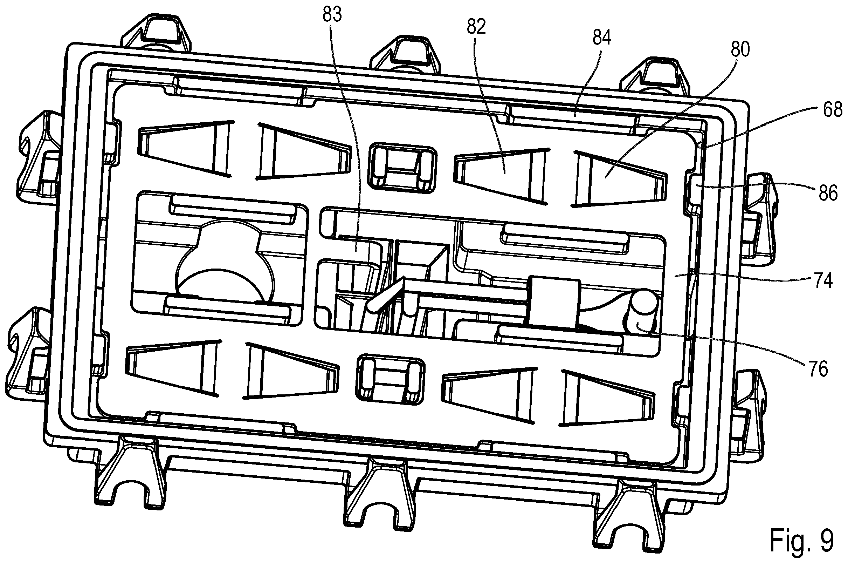

In der Darstellung gemäß Figur 9 sind die vier PTC-Widerstandselemente 72a bis 72d nicht dargestellt. Man erkennt, dass das als Stanzteil ausgeführte Kontaktblech 74 im Bereich jedes PTC-Widerstandselementes 72 mit freigestanzten Federsegmenten 80, 82 ausgebildet ist, die entgegen zu den PTC-Widerstandselementen 72a bis 72d auskragen und federnd an Federanlageflächen 88 anliegen. Durch diese Federvorspannung werden die in Figur 8 zum Betrachter hinweisenden Großflächen der PTC-Widerstandselemente 72a bis 72d flächig an die Verteilerplatte 18 vorgespannt, so dass die Kontaktierung gewährleistet ist. Vorteilhaft ist auch, dass diese Art der Vorspannung sich durch ihre Elastizität positiv auf das Vibrationsverhalten auswirkt. Selbstverständlich kann diese Verspannung auch auf andere Weise, beispielsweise durch getrennt eingelegte Federelemente erfolgen.

Das beim beschriebenen Ausführungsbeispiel verwendete Kontaktblech 74 hat somit eine Doppelfunktion: Zum Einen stellt es den Pluskontakt für die PTC-Widerstandselemente 72a bis 72d dar, zum Anderen dient es zur Federvorspannung dieser Elemente. Am Kontaktblech 74 ist des Weiteren ein Steckerpin 83 zur Verbindung mit dem Pluskontakt des Anschlusssteckers 12 ausgebildet.

Vorteilhaft bildet auch der aus dem Kontaktblech 74 ausgebildete Steckerpin 83 bereits die Kontur des in den Anschlussstecker 12 positionierten Kontakts 62 aus.

Die seitliche Positionierung des Kontaktbleches 74 erfolgt durch eine Vielzahl von seitlichen Anschlagblöcken 84, 86.

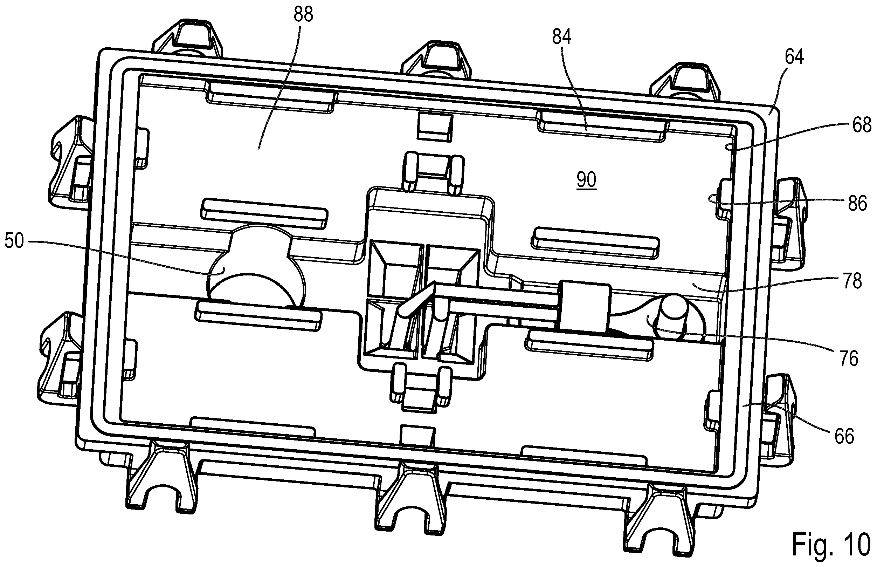

Figur 10 zeigt eine Figur 9 entsprechende Darstellung bei abgenommenem Kontaktblech 74. Sichtbar ist dann eine Auflage 90 zur Lagefixierung des Kontaktbleches 74 sowie die Position des Temperaturfühlers 76 in der Aufnahme 78. Die Auflage 90 hat Federanlageflächen 88 für die Federsegmente 80, 82, von denen in Figur 10 nur eine mit einem Bezugszeichen versehen ist.

Der eigentliche Sensorbereich des Thermofühlers 76 erstreckt sich gemäß der Darstellung in Figur 7 bis in den Außenbereich des Heizgehäuses 42 (benachbart zum Anschlussstecker 12).

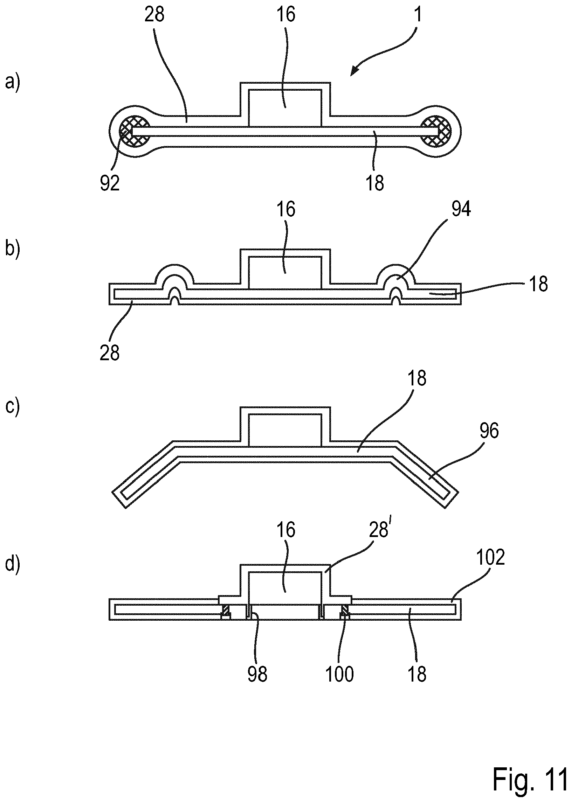

Bei ungünstigen Bedingungen kann es vorkommen, dass es beim Umspritzen/Umgießen aufgrund der unterschiedlichen Ausdehnungskoeffizienten des Kunststoffs und der Verteilerplatte infolge thermischer Spannungen zu Rissbildungen in Kunststoff kommt, so dass die Dichtigkeit des Systems beeinträchtigt ist. Bei dem oben beschriebenen Ausführungsbeispiel werden derartige thermische Spannungen beim Abkühlen des Kunststoffs dadurch vermieden, dass in der Verteilerplatte Durchbrüche 24, 26 oder sonstige Ausnehmungen ausgebildet sind, durch die der derartige Spannungen weitestgehend ausgeglichen werden. Sollten diese Maßnahmen nicht ausreichen, um die Rissbildung zu verhindern, kann das erfindungsgemäße Heizmodul beispielsweise gemäß dem in Figuren 11a bis 11d dargestellten Ausführungen ausgestaltet werden.

In Figur 11 sind schematisierte Querschnittsprofile des Heizmoduls 1 mit der Heizeinheit 16 und der mit der Heizeinheit 16 elektrisch und thermisch gekoppelten Verteilerplatte 18 dargestellt. Wie vorstehend erläutert, ist diese Baugruppe zumindest abschnittsweise von einer Umspritzung 28 fluiddicht ummantelt. Unter dem Begriff "Umspritzung" wird dabei eine Ummantelung verstanden, die vorzugsweise im Spritzgießverfahren, prinzipiell jedoch auch auf andere Weise, beispielsweise durch Tauchen, Ummanteln mittels eines Umhüllungskörpers, etc. ausgeführt werden kann.

Beim Ausführungsbeispiel gemäß Figur 11a ist die Ummantelung/Umspritzung 28 im Umfangsbereich der Verteilerplatte 18 erweitert, so dass zwischen der Verteilerplatte 18 und der Innenumfangswandung der Umspritzung 28 ein Ausgleichsraum 92 verbleibt, der mit einem geeigneten Kompensationsmedium, beispielsweise einem kompressiblen Schaum oder einem geeigneten Gas, vorzugsweise Luft, gefüllt ist. Dieser Ausgleichsraum 92 kann umlaufend um die Verteilerplatte 18 oder aber auch in den Bereichen vorgesehen werden, in denen es zu einer Rissbildung kommen kann. Das heißt, ein derartiger Ausgleichsraum kann auch im Bereich der Verteilerplattengroßflächen oder nur abschnittsweise am Umfang ausgebildet werden.

Figur 11b zeigt eine Variante, bei der die Verteilerplatte 18 mit Sicken 94 oder sonstigem Entlastungsfugen ausgeführt ist. Diese Sicken 94 sind vorzugsweise in den spannungsgefährdeten Bereichen ausgeführt, wobei die Geometrie der Sicken/Spannungsfugen 94 in geeigneter Weise gewählt ist.

Bei der anhand Figur 11a erläuterten Variante besteht ein Vorteil darin, dass die Verteilerplatte 18 weiterhin als vergleichsweise einfaches, plattenförmiges Bauelement ausgeführt werden kann. Beim Ausführungsbeispiel gemäß Figur 11b muss die Verteilerplatte als Stanzbiegeteil oder dergleichen ausgebildet werden, so dass der fertigungstechnische Aufwand größer ist.

Figur 11c zeigt eine Variante des Ausführungsbeispiels gemäß Figur 11b. Dabei ist die Verteilerplatte 18 im Randbereich mit gegenüber der Plattengroßfläche abgewinkelten Flügeln 96 ausgeführt, deren Geometrie im Hinblick auf die Spannungskompensation optimiert ist. Auch eine derartige Verteilerplatte 18 wird als Stanz-Biegeteil ausgebildet.

Die Materialpaarung (Verteilerplatte 18, Ummantelung 28) ist bei den drei vorbeschriebenen Varianten jedoch gleich, das heißt, die Verteilerplatte 18 kann aus vergleichsweise preiswertem Grundmaterial, beispielsweise Aluminium hergestellt werden. Die Umspritzung 28 kann, wie erläutert, vollständig durch ein Spritzgießen oder dergleichen hergestellt werden.

Bei diesen Ausführungsbeispielen muss darauf geachtet werden, dass die Federanlageflächen 88 so ausgebildet sind, dass eine Anlage der Federsegmente 80,82 gewährleistet ist.

Figur 11d zeigt eine Variante, bei der lediglich der Bereich der Heizeinheit 16 mit einer Umspritzung 28' mittels eines Kunststoffmaterials (Spritzgießen, Umgießen, etc.) ausgeführt ist. Das heißt, das Heizelement 16 ist mit einer Art Umspritzungshaube versehen. Diese kann in geeigneter Weise fluiddicht mit der Verteilerplatte 18 verbunden werden. Gemäß Figur 11d können dazu in der Verteilerplatte Verankerungsdurchbrüche 98 ausgebildet sein, in die Randbereiche der Umspritzung 28' eintauchen. Zusätzlich können auch Verbindungselemente 100 oder Dichtelemente vorgesehen sein. Diese Umspritzung 28' und die Elemente zur weiteren Abdichtung (98, 100) sind so ausgelegt, dass die eigentliche Heizeinheit 16 fluiddicht ummantelt ist. Die von der Umspritzung 28' nicht abgedeckten Bereiche der Verteilerplatte 16 können durch eine Lackierung oder dergleichen geschützt werden. Prinzipiell ist es auch möglich, die Verteilerplatte aus einem gegen die Harnstofflösung beständigen Material, beispielsweise VA auszubilden. Die Lackierung ist in Figur 11 mit dem Bezugszeichen 102 versehen. Der Vorteil dieser Lösung besteht darin, dass ein Großteil der Verteilerplatte 16 nicht durch Umspritzen/Umgießen etc. ummantelt ist, so dass die auftretenden Spannungen und damit die Rissbildungen zuverlässig verhindert werden können.

Offenbart sind ein Heizmodul und ein mit einem derartigen Heizmodul ausgeführtes Tanksystem. Das Heizmodul hat eine Heizeinheit, die mit zumindest einem Heizelement bestückt ist, deren Wärme über eine plattenförmige Verteilerplatte an ein Betriebsfluid übertragen wird.

### Bezugszeichenliste:

- 1: Tanksystem
- 2: Tank
- 4: Harnstofflösung
- 6: Fluidauslass
- 8: Heizmodul
- 10: Befestigungsflansch
- 12: Anschlussstecker
- 14: Sauganschluss
- 16: Heizeinheit
- 18: Verteilerplatte
- 20: Großfläche
- 22: Rücklaufeinlass
- 24: Durchbruch
- 26: Durchbruch
- 28: Umspritzung
- 30: Gehäuse
- 32: Anschlussstutzen
- 34: Großfläche
- 36: Rücklaufkanal
- 38: Abstandshalter
- 40: Vorsprung
- 42: Heizgehäuse
- 44: Schnapphaken
- 46: Rastausnehmung
- 48: Flanschring
- 50: Wärmeübertragelement
- 52: Öffnung
- 54: Befestigungsmittel
- 56: Befestigungsmittel
- 58: Massekontakt
- 62: Kontakte
- 64: Umfangsrand
- 66: Dichtung
- 68: Aufnahmeraum
- 70: Ausnehmung
- 72: PTC-Widerstandselement
- 74: Kontaktblech
- 76: Temperaturfühler
- 78: Aufnahme
- 80: Federsegment
- 82: Federsegment
- 83: Steckerpin
- 84: Anschlagblock
- 86: Anschlagblock
- 88: Federanlagefläche
- 90: Auflage
- 92: Ausgleichsraum
- 94: Sicke
- 96: Flügel
- 98: Verankerungsdurchbruch
- 100: Verbindungselement
- 102: Lackierung

## Patentansprüche

1. Heizmodul zum Aufschmelzen oder Erwärmen eines in einem Tanksystem (1) aufgenommenen Betriebsfluids, wobei das Heizmodul (8) eine Heizeinheit (16) aufweist, deren Wärme über ein Wärmeverteilelement auf das Betriebsfluid übertragbar ist, wobei das Wärmeverteilelement eine im Wesentlichen plattenförmige Verteilerplatte (18) ist, wobei zumindest die Heizeinheit (16) und zumindest ein Teil der Verteilerplatte (18) gemeinsam fluiddicht ummantelt, vorzugsweise umspritzt sind, **dadurch gekennzeichnet, dass** die Verteilerplatte (18) auf einer Großfläche (20) die Heizeinheit (16) des Heizmoduls (8) trägt.

2. Heizmodul nach Patentanspruch 1, wobei die Verteilerplatte (18) aus einem gut wärmeleitenden Metall, vorzugsweise durch Stanzen ausgebildet ist.

3. Heizmodul nach Patentanspruch 1 oder 2, wobei ein Fluidauslass (6) an der Heizeinheit (16) ausgebildet ist und mit einem verteilerplattenseitigen Sauganschluss (14) in Fluidverbindung steht.

4. Heizmodul nach einem der vorhergehenden Patentansprüche, wobei Verteilerplatte (18) und Heizeinheit (16) gemeinsam einen Aufnahmeraum (68) für zumindest ein Heizelement bilden, wobei vorzugsweise ein Masseanschluss verteilerplattenseitig und ein Plusanschluss heizeinheitsseitig vorgesehen ist.

5. Heizmodul nach Patentanspruch 1 oder 2, wobei ein Fluidauslass (6) abschnittsweise beheizt ist und die Heizeinheit (16) sowie die Verteilerplatte (18) durchsetzt und in einem Sauganschluss (14) mündet.

6. Heizmodul nach Patentanspruch 5, mit einem buchsenförmigen Wärmeübertragelement (50), das im Fluidauslass (6) angeordnet ist und über die Heizeinheit (16) beheizbar ist.

7. Heizmodul nach einem der vorhergehenden Patenansprüche, wobei an einer von der Heizeinheit (16) entfernten Großfläche (34) der Verteilerplatte (18) ein Rücklaufkanal (36) ausgebildet ist, der einerseits in einem Sauganschluss (14) und andererseits in einem Rücklaufeinlass (22) der Verteilerplatte (18) mündet.

8. Heizmodul nach Patentanspruch 7, wobei der Rücklaufkanal (36) im Wesentlichen durch das Umspritzen ausgebildet ist.

9. Heizmodul nach Patentanspruch 3 oder 5, mit einem beim Umspritzen ausgebildetem Befestigungsflansch (10), der einen elektrischen Anschluss und den Fluidauslass (6) umgreift.

10. Heizmodul nach Patentanspruch 9, wobei der Befestigungsflansch (10) als Schweißflansch ausgeführt ist.

11. Heizmodul nach einem der vorhergehenden Patentansprüche, wobei an der Verteilerplatte (18) eine Aufnahme für einen Filter ausgebildet ist.

12. Heizmodul nach einem der vorhergehenden Patentansprüche, wobei an einem verteilerplattenseitigen Umfangsrand (64) der Heizeinheit (16) eine Dichtung (66) vorgesehen ist.

13. Heizmodul nach einem der vorhergehenden Patentansprüche, wobei in einem Aufnahmeraum (68) der Heizeinheit (16) ein Temperaturfühler (76) aufgenommen ist.

14. Heizmodul nach einem der vorhergehenden Patentansprüche, wobei die Heizeinheit (16) durch Rastmittel oder dergleichen mit der Verteilerplatte (18) vormontiert ist.

15. Heizmodul nach Patentanspruch 4 oder einem darauf rückbezogenen Patentanspruch, wobei das zumindest eine Heizelement der Heizeinheit (16) ein PTC-Widerstandselement (72), ein Drahtwiderstandselement oder ein Rohrheizkörper ist.

16. Heizmodul nach einem der vorhergehenden Patentansprüche, mit in einem Aufnahmeraum (68) der Heizeinheit (16) aufgenommenen Federn zum Vorspannen der Heizelemente gegen die Verteilerplatte (18).

17. Heizmodul nach einem der vorhergehenden Patentansprüche, wobei zumindest die Heizeinheit (16) ummantelt ist und die Verteilerplatte (18) und/oder deren Ummantelung derart ausgelegt ist, dass beim Umspritzen/Umgießen der Heizeinheit (16) auftretende Spannungen kompensierbar sind.

18. Tanksystem mit einem Tank (2), in dem ein Heizmodul (8) gemäß einem der vorhergehenden Patentansprüche aufgenommen ist.

## Claims

1. A heating module for melting or heating an operating fluid accommodated in a tank system, wherein the heating module (8) comprises a heating unit (16) the heat of which can be transferred to the operating fluid via a heat distributing element, wherein the heat distributing element is a substantially plate-shaped distributor plate (18), wherein at least the heating unit (16) and at least part of the distributor plate (18) are jointly sheathed, preferably surrounded by injection-molding in a fluid-tight manner, **characterized in that** the distributor plate (18) supports the heating unit (16) of the heating module (8) on a large surface (20).

2. The heating module according to patent claim 1, wherein the distributor plate (18) is made of adequately heat-conductive material, preferably by stamping.

3. The heating module according to patent claim 1 or 2, wherein a fluid outlet (6) is formed on the heating unit (16) and is in fluid communication with a suction connection (14) on the distributor plate side.

4. The heating module according to any one of the preceding patent claims, wherein the distributor plate (18) and the heating unit (16) jointly form a receiving chamber (68) for at least one heating element, with preferably a ground connection being provided on the distributor plate side and a positive connection being provided on the heating unit side.

5. The heating module according to patent claim 1 or 2, wherein a fluid outlet (6) is heated in portions and passes through the heating unit (16) as well as through the distributor plate (18) and ends into a suction connection (14).

6. The heating module according to patent claim 5, comprising a bushing-type heat transfer element (50) arranged in the fluid outlet (6) and being adapted to be heated via the heating unit (16).

7. The heating module according to any one of the preceding patent claims, wherein on a large surface (34) of the distributor plate (18) distant from the heating unit (16) a return passage (36) is formed which, on the one hand, ends into a suction connection (14) and, on the other hand, ends into a return inlet (22) of the distributor plate (18).

8. The heating module according to patent claim 7, wherein the return passage (36) is formed substantially by surrounding injection-molding.

9. The heating module according to patent claim 3 or 5, comprising a mounting flange (10) formed during surrounding injection-molding, wherein the flange encompasses an electric connection and the fluid outlet (6).

10. The heating module according to patent claim 9, wherein the mounting flange (10) is a welding flange.

11. The heating module according to any one of the preceding patent claims, wherein a seat for a filter is formed on the distributor plate (18).

12. The heating module according to any one of the preceding patent claims, wherein a seal (66) is provided on a peripheral edge (64) of the heating unit (16) on the distributor plate side.

13. The heating module according to any one of the preceding patent claims, wherein in a receiving chamber (68) of the heating unit (16) a temperature sensor (76) is incorporated.

14. The heating module according to any one of the preceding patent claims, wherein the heating unit (16) is pre-assembled with the distributor plate (18) by engaging means or the like.

15. The heating module according to patent claim 4 or one of its dependent patent claims, wherein the at least one heating element of the heating unit (16) is a PTC resistance element (72), a wire resistance element or a tubular heating element.

16. The heating module according to any one of the preceding patent claims comprising springs received in a receiving chamber (68) of the heating unit (16) for biasing the heating elements against the distributor plate (18).

17. The heating module according to any one of the preceding patent claims, wherein at least the heating unit (16) is sheathed and the distributor plate (18) and/or the sheathing thereof is/are designed so that tensions occurring during surrounding the heating unit (16) by injection molding/casting can be compensated.

18. A tank system comprising a tank (2) in which a heating module (8) according to any one of the preceding patent claims is accommodated.

## Revendications

1. Module de chauffage pour la fusion ou le réchauffement d'un fluide de travail reçu dans un système de réservoir (1), dans lequel le module de chauffage (8) présente une unité de chauffage (16), dont la chaleur peut être transférée au fluide de travail par le biais d'un élément de distribution de chaleur, dans lequel l'élément de distribution de chaleur est une plaque de distribution sensiblement en forme de plaque (18), dans lequel au moins l'unité de chauffage (16) et au moins une partie de la plaque de distribution (18) sont enveloppées ensemble de manière étanche au fluide, de préférence surmoulées, **caractérisé en ce que** la plaque de distribution (18) porte sur une grande surface (20) l'unité de chauffage (16) du module de chauffage (8).

2. Module de chauffage selon la revendication 1, dans lequel la plaque de distribution (18) est réalisée en un métal bien thermoconducteur, de préférence par estampage.

3. Module de chauffage selon la revendication 1 ou 2, dans lequel une sortie de fluide (6) est réalisée au niveau de l'unité de chauffage (16) et est en liaison fluidique avec un raccord d'aspiration (14) côté plaque de de distribution.

4. Module de chauffage selon l'une quelconque des revendications précédentes, dans lequel la plaque de distribution (18) et l'unité de chauffage (16) forment ensemble un espace de réception (68) pour au moins un élément de chauffage, dans lequel de préférence un raccord à la masse est prévu côté plaque de distribution et un raccord plus côté unité de chauffage.

5. Module de chauffage selon la revendication 1 ou 2, dans lequel une sortie de fluide (6) est chauffée par section et traverse l'unité de chauffage (16) ainsi que la plaque de distribution (18) et débouche dans un raccord d'aspiration (14).

6. Module de chauffage selon la revendication 5, avec un élément de transfert de chaleur (50) en forme de douille, qui est agencé dans la sortie de fluide (6) et peut être chauffé par le biais de l'unité de chauffage (16).

7. Module de chauffage selon l'une quelconque des revendications précédentes, dans lequel un canal de retour (36), qui débouche d'un côté dans un raccord d'aspiration (14) et de l'autre côté dans une entrée de retour (22) de la plaque de distribution (18), est réalisé au niveau d'une grande surface (34) de la plaque de distribution (18) éloignée de l'unité de chauffage (16).

8. Module de chauffage selon la revendication 7, dans lequel le canal de retour (36) est réalisé sensiblement par le surmoulage.

9. Module de chauffage selon la revendication 3 ou 5, avec une bride de fixation (10) réalisée lors du surmoulage, qui entoure un raccord électrique et la sortie de fluide (6).

10. Module de chauffage selon la revendication 9, dans lequel la bride de fixation (10) est réalisée en tant que bride à souder.

11. Module de chauffage selon l'une quelconque des revendications précédentes, dans lequel un logement pour un filtre est réalisé au niveau de la plaque de distribution (18).

12. Module de chauffage selon l'une quelconque des revendications précédentes, dans lequel un joint d'étanchéité (66) est prévu au niveau d'un bord circonférentiel (64) côté plaque de distribution de l'unité de chauffage (16).

13. Module de chauffage selon l'une quelconque des revendications précédentes, dans lequel une sonde de température (76) est reçue dans un espace de logement (68) de l'unité de chauffage (16).

14. Module de chauffage selon l'une quelconque des revendications précédentes, dans lequel l'unité de chauffage (16) est prémontée par des moyens d'encliquetage ou similaire avec la plaque de distribution (18).

15. Module de chauffage selon la revendication 4 ou une revendication s'y référant, dans lequel l'au moins un élément de chauffage de l'unité de chauffage (16) est un élément de résistance PTC (72), un élément de résistance à fil ou un corps chauffant tubulaire.

16. Module de chauffage selon l'une quelconque des revendications précédentes, avec des ressorts reçus dans un espace de logement (68) de l'unité de chauffage (16) pour la précontrainte des éléments de chauffage contre la plaque de distribution (18).

17. Module de chauffage selon l'une quelconque des revendications précédentes, dans lequel au moins l'unité de chauffage (16) est enveloppée et la plaque de distribution (18) et/ou son enveloppe sont conçues de sorte que des tensions apparaissant lors du surmoulage/coulage de l'unité de chauffage (16) peuvent être compensées.

18. Système de réservoir avec un réservoir (2), dans lequel un module de chauffage (8) selon l'une quelconque des revendications précédentes est reçu.
